# EUROPÄISCHE PATENTSCHRIFT

(11) **EP 3 767 909 B1**
(45) Veröffentlichungstag und Bekanntmachung des Hinweises auf die Patenterteilung: **26.02.2025**
(21) Anmeldenummer: 19186690.4
(22) Anmeldetag: 17.07.2019
(51) Int. Cl.: H04L 9/40

(54) **VERFAHREN UND KOMMUNIKATIONSEINHEIT ZUR KRYPTOGRAPHISCH GESCHÜTZTEN UNIDIREKTIONALEN DATENÜBERTRAGUNG VON NUTZDATEN ZWISCHEN ZWEI NETZWERKEN**
METHOD AND COMMUNICATION UNIT FOR CRYPTOGRAPHICALLY PROTECTED UNIDIRECTIONAL DATA TRANSMISSION OF USEFUL DATA BETWEEN TWO NETWORKS
PROCÉDÉ ET DISPOSITIF DE COMMUNICATION DESTINÉ À LA TRANSMISSION UNIDIRECTIONNELLE DE DONNÉES PROTÉGÉE DE MANIERE CRYPTOGRAPHIQUE DES DONNÉES UTILES ENTRE DEUX RÉSEAUX

(43) Veröffentlichungstag der Anmeldung: 20.01.2021
(73) Patentinhaber: Siemens Mobility GmbH, 81739 München (DE)
(72) Erfinder: Falk, Rainer, 85586 Poing (DE); Seltzsam, Stefan, 85653 Aying (DE); Seuschek, Hermann, 81373 München (DE); Wimmer, Martin, 85579 Neubiberg (DE)
(74) Vertreter: Siemens Patent Attorneys

(56) Entgegenhaltungen:
- DE-A1- 102015 200 279
- DE-A1- 102017 212 474

## Beschreibung

Die Erfindung betrifft ein Verfahren zur kryptographisch geschützten unidirektionalen Datenübertragung von Nutzdaten (z.B. Daten eines Feldgeräts) zwischen einem ersten Netzwerk mit einer ersten Sicherheitsanforderung und einem zweiten Netzwerk mit einer zweiten, im Vergleich zum ersten Netzwerk unterschiedlichen Sicherheitsanforderung sowie eine zugehörige Kommunikationseinheit und Computerprogrammprodukt.

Zur sicheren Kommunikation zwischen einem sicherheitskritischen und einem offenen Netzwerk, wie z.B. einem industriellen Steuerungsnetzwerk (engl. Industrial Control Network oder Operational Network) und einem klassischen IT-Netzwerk, können beispielsweise Einwegkommunikationseinheiten, wie z.B. Datendioden, eingesetzt werden, um eine unidirektionale, rückwirkungsfreie Datenübertragung zu ermöglichen. Eine Datendiode mit Feedbackkanal, auch als bidirektionaler Network Guard oder Security Gateway bezeichnet, ermöglicht einen sicheren Datentransfer zwischen zwei Informationsbereichen mit unterschiedlichen Sicherheitsstufen. Ein Network Guard ist in der Regel eine Kombination aus Hardware und Software und ermöglicht mehr Funktionalität als Firewalls, wodurch ein höherer Schutz als bei herkömmlichen Firewalls erreichbar ist. Insbesondere kann die Rückwirkungsfreiheit Hardwarebasiert gewährleistet werden, sodass diese Eigenschaft selbst bei einer Software-Fehlfunktion erhalten bleibt.

Ein bidirektionaler Network Guard ist in der Regel derart aufgebaut, zwei voneinander getrennte unidirektionale Datenströme jeweils mittels einer Datendiode zu realisieren, wobei die Datenströme in entgegengesetzter Richtung fließen. Dies erlaubt einen Datenaustausch in beide Richtungen, wobei jeweils die Einwegfunktion gewährleistet ist. Beispielsweise können mit einem bidirektionalen Network Guard Daten aus einem ersten Netzwerk mit hoher Sicherheitsanforderung in ein zweites offenes Netzwerk mit geringer Sicherheitsanforderung bzw. vom Netzwerk mit geringer Sicherheitsanforderung an ein Netzwerk mit hoher Sicherheitsanforderung übermittelt werden. Die Sicherheitsanforderung kann insbesondere die Integrität und/oder die Verfügbarkeit und/oder die Vertraulichkeit betreffen. Bei industriellen Steuerungsnetzwerken bestehen häufig äußerst hohe Anforderungen an die Integrität und die Verfügbarkeit, die auch bei einer Kopplung mit einem Fabriknetzwerk, einem Büronetzwerk oder einem öffentlichen Netzwerk verlässlich erfüllt werden sollen.

Bei einem Datentransfer vom Netzwerk mit geringer Sicherheitsanforderung in das Netzwerk mit hoher Sicherheitsanforderung ist in der Regel eine zusätzliche Prüfung notwendig, um die Integrität und/oder Sicherheit des Netzwerks mit hoher Sicherheitsanforderung und/oder die Netzwerkverfügbarkeit zu gewährleisten.

Zwischen dem einem Gerät, z.B. einem Feldgerät im ersten Netzwerk, und einer Kommunikationseinheit im zweiten Netzwerk ist eine herkömmliche Ende-zu-Ende Verschlüsselung, beispielsweise mit Sicherheitsprotokollen wie IKEv2/IPsec oder TLS, nicht umsetzbar. Der Grund hierfür ist, dass sich über die unidirektionale Transferstrecke ein Sitzungskontext - beispielsweise über gängige Handshake-Mechanismen - nicht aufbauen lässt.

Auf Seiten des Geräts müssen spezielle unidirektionale Gatewayprotokolle eingesetzt werden. D.h. bisher verwendete Protokolle (z.B. MQTT) müssen für die Verwendung der unidirektionalen Strecke ersetzt und über den Protokoll-Proxy realisiert werden. Eine Integration der unidirektionalen Netzanbindung (etwa über eine Data Capturing Unit, DCU) ist damit nicht ohne Anpassung der Implementierung und des Protokollstacks des Gerätes möglich.

Aus der DE 10 2017 212 474 A1 ist ein Verfahren zur Überprüfung von Verbindungsparametern bekannt, bei dem während des Aufbaus einer kryptographisch geschützten Kommunikationsverbindung zwischen einer ersten Kommunikationsvorrichtung und einer zweiten Kommunikationsvorrichtung (**i**) eine Attestierungsdatenstruktur, die mindestens einen Verbindungsparameter der ersten und/oder zweiten Kommunikationsvorrichtung als Attestierungsinformation enthält, von der ersten und/
oder zweiten Kommunikationsvorrichtungen an die zweite und/oder erste Kommunikationsvorrichtung gesendet wird, (**ii**) die Attestierungsdatenstruktur durch eine innerhalb der Datenübertragungsstrecke der Kommunikationsverbindung angeordnete Überwachungsvorrichtung mitgehört wird und (**iii**) die Attestierungsinformation gegenüber einer vorgegebenen Richtlinie geprüft wird.

Aus der DE 10 2015 200 279 A1 ist ein Verfahren zum rückwirkungsfreien Erfassen von Daten bekannt, die zwischen Vorrichtungen in einem ersten Netzwerk mit hoher Sicherheitsanforderung kryptographisch geschützt übertragen werden und durch eine Einwegübertragungseinrichtung in einem zweiten Netzwerk mit geringer Sicherheitsanforderung mitgehört werden. Dabei werden (**i**) mindestens ein kryptographischen Parameter zwischen den kommunizierenden Vorrichtungen im ersten Netzwerk zur Verwendung in einer nachfolgenden Kommunikation ausgehandelt, (**ii**) eine Übertragungsstruktur in mindestens einer der Vorrichtungen, in der zumindest teilweise die ausgehandelten kryptographischen Parameter enthalten sind, erzeugt und innerhalb des ersten Netzwerks übertragen und (**iii**) die Übertragungsdatenstruktur durch eine Einwegübertragungseinrichtung mitgehört und in das zweite Netzwerk übermittelt.

Es ist demnach eine Aufgabe der vorliegenden Erfindung, eine gegenüber dem eingangs genannten Stand der Technik verbesserte Lösung für eine unidirektionale Datenübertragung zwischen zwei Netzwerken mit unterschiedlicher Sicherheitsanforderung zu schaffen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt. Die Erfindung beansprucht ein Verfahren zur kryptographisch geschützten unidirektionalen Datenübertragung von Nutzdaten (z.B. Daten des Feldgeräts), insbesondere zwischen einem ersten Netzwerk mit einer ersten Sicherheitsanforderung und einem zweiten Netzwerk mit einer zweiten, im Vergleich zum ersten Netzwerk unterschiedlichen Sicherheitsanforderung, wobei
- ein oder mehrere die Nutzdaten umfassenden Datenpakete auf einer Ende-zu-Ende-Datenübertragungsstrecke von einer ersten Kommunikationseinheit (z.B. Client) in einem ersten Netzwerk über eine Einwegkommunikationseinheit (z.B. DCU), die zwischen dem ersten Netzwerk und einem zweiten Netzwerk angeordnet ist, an eine zweite Kommunikationseinheit im zweiten Netzwerk übertragen werden,
aufweisend folgende Verfahrensschritte:
I. Festlegen bzw. Aushandeln von mindestens einem kryptographischen Parameter zwischen der ersten Kommunikationseinheit und einer dritten Kommunikationseinheit im ersten Netzwerk für die kryptographisch geschützte, vorzugsweise unidirektionale Datenübertragung von Nutzdaten von der ersten Kommunikationseinheit zur zweiten Kommunikationseinheit,
II. Erzeugen zumindest einer Übertragungsdatenstruktur, in der zumindest teilweise die ausgehandelten kryptographischen Parameter für die kryptographisch geschützte Datenübertragung des Datenpakets oder in der mehreren Datenpakete enthalten sind,
III. Verschlüsseln der zumindest einen Übertragungsdatenstruktur mit einem Schlüssel (vorzugsweise öffentlichen Schlüssel) der zweiten Kommunikationseinheit,
IV. Übertragen der verschlüsselten, zumindest einen Übertragungsdatenstruktur zur zweiten Kommunikationseinheit im zweiten Netzwerk,
V. Entschlüsseln der verschlüsselten, zumindest einen Übertragungsstruktur,
VI. Verschlüsseln der zur zweiten Kommunikationseinheit zu übertragenden Nutzdaten mit den ausgehandelten kryptographischen Parametern und Übertragen der verschlüsselten Nutzdaten zur zweiten Kommunikationseinheit, und
VII. Entschlüsseln der übertragenen Nutzdaten mit den in der entschlüsselten Übertragungsstruktur enthaltenen kryptographischen Parametern.

Schritt I kann zwischen der ersten Kommunikationseinheit und einer virtuellen Kommunikationseinheit im ersten Netzwerk, vorzugsweise auf der ersten Kommunikationseinheit, realisiert sein. Der kryptographische Parameter repräsentiert bzw. umfasst ein Sitzungsparameter, der einen kryptographischen Sitzungsschlüssel (engl. session key) umfasst.

Schritt VI kann über die Einwegkommunikationseinheit geleitet werden. Verschlüsseln bezeichnet dabei einen kryptographischen Schutz, bei dem die Integrität der Nutzdaten durch eine kryptographische Prüfsumme (Message Authentication Code, digitale Signatur) geschützt ist oder bei der die Nutzdaten verschlüsselt sind oder bei der die Integrität und die Vertraulichkeit der Nutzdaten durch eine authentisierte Verschlüsselung (engl. authenticated encryption) geschützt sind.

Eine dritte virtuelle Kommunikationseinheit kann der Einwegkommunikationseinheit vorgeordnet sein, welche die Schritte II, III und IV des Anspruchs 1 ausführt. (Schritt II und/oder III und/oder IV. kann auch die erste Kommunikationseinheit erledigen).

Auf der Teilübertragungsstrecke zwischen der ersten Kommunikationseinheit und der dritten Kommunikationseinheit kann das Datenübertragungsprotokoll Datagram Transport Layer Security, abgekürzt DTLS, verwendet werden.

Eine weitere, der zweiten Kommunikationseinheit vorgeordnete Kommunikationseinheit kann den Schritt V mit Hilfe der kryptographischen Parameter aus der Übertragungsstruktur ausführen (Schritt VI bzw. VII können von der zweiten Kommunikationseinheit erledigt werden).

Der mindestens ein kryptographischer Parameter resultiert aus der Authentisierungs- und Schlüsselvereinbarung und kann einen Sitzungsschlüssel, eine Cipher Suite, ein Security-Token, eine Signatur und/oder Zertifikat umfassen. Die Authentisierung- und Schlüsselvereinbarung erfolgt vorzugsweise zwischen der ersten Kommunikationseinheit unter Nutzung eines Credentials (Zertifikat, privater oder geheimer Schlüssel) der ersten Kommunikationseinheit und einer dritten bzw. virtuellen Kommunikationseinheit unter Nutzung eines Pseudo-Credentials. Das Pseudo-Credential ist ein allgemein bekanntes Credential, das insbesondere auch der zweiten Kommunikationseinheit bekannt ist. Es dient dazu, ein herkömmliches bidirektionales Authentisierung- und Schlüsselaustauschprotokoll lokal (auf dem ersten Gerät oder zumindest mit einem Gerät vor der Einwegkommunikationseinheit) durchzuführen. Abhängig von dem bei der Durchführung des bidirektionalen Authentisierung- und Schlüsselaustauschprotokoll ausgetauschten Protokollnachrichten wird die Übertragungsdatenstruktur gebildet und mit einem privaten Credential der zweiten Kommunikationseinheit verschlüsselt. Dadurch wird erreicht, dass nach Übertragung über die Einwegkommunikationseinheit nur die zweite Kommunikationseinheit die verschlüsselte Übertragungsdatenstruktur entschlüsseln kann. Dennoch kann durch die erste Kommunikationseinheit ein herkömmliches bidirektionales Authentisierung- und Schlüsselaustauschprotokoll verwendet werden, um letztendlich einen Sitzungsschlüssel mit der nur unidirektional erreichbaren Kommunikationseinheit einzurichten.

Das erfindungsgemäße Verfahren ist vorzugsweise computerimplementiert ausgestaltet. Unter "computerimplementiert" kann im Zusammenhang mit der Erfindung eine Implementierung des Verfahrens verstanden werden, bei dem insbesondere ein Prozessor mindestens einen Verfahrensschritt ausführt.

Die Erfindung sieht vor, dass ein IoT-Gerät/Feldgerät eine Ende-zu-Ende-geschützte unidirektionale Datenübertragung über eine Einweg-Kommunikationsstrecke an einen Zielserver (IoT-Backend, IoT-Edge-Gateway) vornehmen kann, wobei dynamisch ein Sitzungsschlüssel eingerichtet wird. Dabei ist keine weitere Anpassung eines Übertragungsprotokolls notwendig. Die übertragenen Daten(pakete) sind dabei kryptographisch geschützt, sodass ein Ende-zu-Ende-Schutz realisierbar ist. Neben der verbesserten Sicherheit der Datenübertragung hat dies den weiteren Vorteil, dass eine sehr einfache und dadurch wenig aufwändige und zuverlässige Einwegkommunikationseinheit verwendbar ist. Weiterhin kann die gleiche Art der Übertragung erfolgen, unabhängig davon, ob eine Einwegkommunikationseinheit vorhanden ist oder nicht. Daher kann eine Einwegkommunikationseinheit bei Bedarf auch einfach nachgerüstet werden.

Dazu kann das DTLS-Sicherheitsprotokoll (DTLS Security Protocol) so eingesetzt werden, dass es rein unidirektional verwendbar ist. Diese Ausprägung von DTLS kann auch als UDTLS bezeichnet werden (unidirectional DTLS).

Dadurch können Nutzdaten kryptographisch geschützt auf Basis einer vorhandenen Sitzungs-Kontext-Information übermittelt werden. Die Herausforderung ist, dass der DTLS-Sitzungskontext (insbesondere kryptographische Sitzungsschlüssel, ausgewählte Cipher Suite, Protokolloptionen) beim Sitzungsaufbau (Session establishment) initialisiert werden muss.

Herkömmliche sichere Kommunikationsprotokolle können weiterverwendet werden, um Nutzerdaten zu verschlüsseln (insbesondere ein DTLS Record Layer oder alternativ SRTP (Secure Real-time Transport Protocol) oder IKEv2/IPsec (Internet Key Exchange, IP security).

Diese Daten können direkt, d.h**.** ohne Protokollumwandlung und damit direkt, über eine Einweg-Kommunikationsstrecke übertragen werden (z.B**.** Daten-Diode, restriktiv konfigurierte Firewall, die z.B. alle eingehenden Datenpakete blockt).

Eine Übertragungseinrichtung ist geeignet zur kryptographisch geschützten unidirektionalen Datenübertragung von Nutzdaten zwischen einem ersten Netzwerk und einem zweiten Netzwerk, wobei ein oder mehrere die Nutzdaten umfassende Datenpakete auf einer Ende-zu-Ende-Datenübertragungsstrecke von einer ersten Kommunikationseinheit in dem ersten Netzwerk zu einer zweiten Kommunikationseinheit im zweiten Netzwerk übertragen werden, aufweisend:
- eine Bereitstellungseinheit zum Bereitstellen oder Erzeugen zumindest einer Übertragungsdatenstruktur, in der (die) zumindest teilweise ausgehandelten kryptographischen Parameter für die kryptographisch geschützte Datenübertragung enthalten sind,
- eine Verschlüsselungseinheit zum Verschlüsseln der zumindest einen Übertragungsdatenstruktur mit einem (öffentlichen) Schlüssel einer zweiten Kommunikationseinheit im zweiten Netzwerk,
- eine Übertragungseinheit zum Übertragen der verschlüsselten, zumindest einen Übertragungsdatenstruktur zur zweiten Kommunikationseinheit im zweiten Netzwerk,
- eine Verschlüsselungseinheit zum Verschlüsseln der zur zweiten Kommunikationseinheit zu übertragenden Nutzdaten mit den (mit einer bzw. der oben genannten virtuellen Kommunikationseinheit) ausgehandelten kryptographischen Parametern und Übertragen der verschlüsselten Nutzdaten zur zweiten Kommunikationseinheit (durch eine erste Kommunikationseinheit im ersten Netzwerk oder dieser virtuelle Kommunikationseinheit).

Gemäß einem weiteren Aspekt betrifft die Erfindung eine Anordnung umfassend die Übertragungseinrichtung der oben genannten Art und die Entschlüsselungseinrichtung der oben genannten Art, zusätzlich aufweisend:
- zumindest eine Kommunikationssitzungseinheit zum Festlegen bzw. Aushandeln von mindestens einem kryptographischen Parameter, für die kryptographisch geschützte, Datenübertragung von Nutzdaten von der ersten Kommunikationseinheit zu einer weiteren Kommunikationseinheit.

Eine Anordnung umfassend die vorgenannte Kommunikationseinheit und die vorgenannte virtuelle Kommunikationseinheit, weist zusätzlich auf:
- zumindest eine Kommunikationssitzungseinheit zum Festlegen/Aushandeln von mindestens einem kryptographischen Parameter, für die kryptographisch geschützte, Datenübertragung von Nutzdaten von der ersten Kommunikationseinheit zu einer weiteren Kommunikationseinheit.

Eine Einwegkommunikationseinheit ist geeignet zur kryptographisch geschützten unidirektionalen Datenübertragung, über die Nutzdaten zwischen einem ersten Netzwerk mit einer ersten Sicherheitsanforderung und einem zweiten Netzwerk mit einer zweiten, im Vergleich zum ersten Netzwerk unterschiedlichen Sicherheitsanforderung, umfassend eine Übertragungseinrichtung der oben genannten Art.

Eine Einheit bzw. Komponente, insbesondere eine Kommunikationseinheit bzw. Netzwerkkomponente, kann insbesondere als eine Hardware-Komponente ausgebildet sein. Eine Komponente kann insbesondere einen Prozessor umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

Des Weiteren betrifft die Erfindung ein Computerprogrammprodukt, das direkt in einen programmierbaren Computer ladbar ist, umfassend Programmcodeteile, die dazu geeignet sind, die Schritte eines erfindungsgemäßen computerimplementierten Verfahrens durchzuführen.

Ein Computerprogrammprodukt, wie zum Beispiel ein Computerprogramm-Mittel, kann beispielsweise als Speichermedium oder Datenträger, wie zum Beispiel als Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen computerimplementierten Verfahrens und der Übertragungsvorrichtung sind in den Zeichnungen beispielhaft dargestellt und werden anhand der nachfolgenden Beschreibung näher erläutert. Es zeigen:
- Fig. 1:: eine schematische Darstellung des Zusammenwirkens der erfindungsgemäßen Kommunikationseinheiten bzw. Einrichtungen und
- Fig. 2:: ein Ablaufdiagramm eines erfindungsgemäßen Vorgehens.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(-komponenten) oder ausschließlich per Software(-komponenten) realisiert werden. Alternativ und/oder zusätzlich kann der Fachmann im Rahmen seines fachmännischen Könnens weitestgehend beliebige erfindungsgemäße Kombinationen aus Hardware(-komponenten) und Software(-komponenten) wählen, um erfindungsgemäße Realisierungsvarianten umzusetzen.

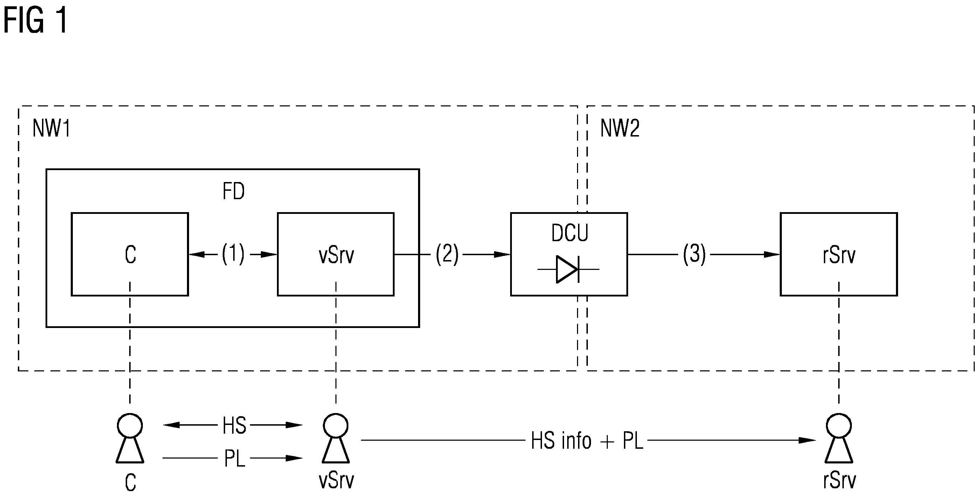

Figur 1 zeigt das Zusammenwirken der erfindungsgemäßen Kommunikationseinheiten.

Es sind beispielhaft zwei Netzwerke NW1 und NW2 dargestellt. Hierbei können das Netzwerk NW1 eine im Vergleich zum zweiten Netzwerk NW2 unterschiedliche Sicherheitsanforderung aufweisen. Netzwerk NW1 kann z.B. einem Fabriknetzwerk entsprechen und Netzwerk NW2 kann ein Remote Netzwerk zur Diagnose, z.B. für eine vorausschauende Wartung, der Komponenten/Einheiten des Netzwerks NW1 sein. In Netzwerk NW 1 gibt es eine erste Kommunikationseinheit FD, die als Feldgerät bzw. IOT-Gerät ausgestaltet sein kann, wobei das Feldgerät eine Client-Einheit C bzw. -komponente umfasst, die beispielsweise als eine Art Kommunikationssitzungseinheit ausgebildet sein kann. Diese Kommunikationssitzungseinheit kann mindestens einen kryptographischen Parameter, für eine kryptographisch geschützte Datenübertragung von Nutzdaten PL (Payload) von der ersten Kommunikationseinheit zu einer weiteren Kommunikationseinheit. Die weitere bzw. dritte Kommunikationseinheit ist hierbei vorzugsweise eine virtuelle Kommunikationseinheit vSrv sein. Des Weiteren befindet sich im Netzwerk NW2 eine zweite Kommunikationseinheit, die als abgesetzter (remote) Server rSrv ausgestaltet sein kann.

Es wird daher im gekennzeichneten Schritt 1 ein Handshake HS (z.B. DTLS-Handshake, DTLS = Datagramm Transport Layer Security), d.h. der Kommunikationskontext und/oder ein oder mehrere kryptographische Parameter wird mit einem lokalen, virtuellen Kommunikationseinheit vSrv ausgehandelt bzw. festgelegt. Dabei findet eine bidirektionale Kommunikation statt. Es erfolgt durch den Sender, hier die erste Kommunikationseinheit C ein DTLS-Handshake mit einem virtuellen DTLS-Endpunkt bzw. -Server, im Beispiel die virtuelle Kommunikationseinheit vSrv, welcher vorzugsweise auf derselben Hardware wie der Client C implementiert ist. Es kann jedoch auch ein mit Client C verbundenes Hardware-Security-Modul oder ein anderer Kommunikationsknoten verwendet werden. Dabei kann ein allgemein bekanntes Pseudo-Credential für die Authentisierung des virtuellen Servers verwendet werden. Er dient hier nicht der tatsächlichen Authentisierung des DTLS-Endpunkts, sondern ist virtuell vorhanden, um einen (bidirektionalen) DTLS-Handshake durchführen zu können. In allen Ausführungsformen ist die virtuelle Kommunikationseinheit vSrc einer Einwegkommunikationseinheit DCU, z.B. ein Einweg-Gateway, eine Datendiode oder auch eine DCU (rückwirkungsfreie Data Capture Unit http://www.siemens.com/dcu), vorgeordnet, d.h. der DTLS-Handshake erfolgt aus technischer Sicht lokal ohne über die Einwegkommunikationseinheit übertragen zu werden.

Es wird jedoch ein aufgezeichneter Handshake bzw. allgemein eine davon abhängig gebildete Information als Handshake-Information HSInfo über die Einwegkommunikationseinheit an den Server rSrv übertragen, sodass der Server rSrv die verschlüsselten, ebenfalls an ihn übertragenen Nutzdaten PL (Record Layer) entschlüsseln kann. Dafür wird ein allgemein bekanntes Schlüsselpaar (öffentlicher Schlüssel PubK und privater Schlüssel PK) für die virtuelle Kommunikationseinheit vSrv verwendet. Weiterhin kann für die virtuelle Kommunikationseinheit vSrv ein allgemein bekannter kryptographischer Parameter als Diffie-Hellman-Zufallswert verwendet werden. Es kann die virtuelle Kommunikationseinheit vServ sowohl die Funktionen des Client C sowie die Funktionen eines DTLS-Servers in sich vereint und somit "mit sich selbst" eine DTLS-Sitzung einrichtet. Dadurch können vorhandene DTLS-Implementierungen ohne spezielle Anpassungen verwendet werden.

Eine Information der DTLS-Sitzung (DTLS-Session) bzw. des DTLS-Handshakes wird nun auf dem Client C ermittelt und dem tatsächlichen Zielserver (rSrv), im Beispiel die zweite Kommunikationseinheit rSrv unidirektional übertragen. Eine von einer vorzugsweise im Client C implementierten Kommunikationssitzungseinrichtung (nicht in der Figur explizit dargestellt) kann eine Übertragungsdatenstruktur als Handshake-Information HSInfo bezeichnet erzeugen und/oder bereitstellen. Die Handshake-Information HSInfo beinhaltet im Wesentlichen die Information des Schlüsselaustauschs (Handshake) zwischen dem Client C und der virtuellen Kommunikationseinheit vSrv.

Vorzugsweise wird die Handshake-Information HSInfo durch eine nicht explizit dargestellte Verschlüsselungseinheit in der virtuellen Kommunikationseinheit vSrv verschlüsselt und/oder durch den Client C digital signiert an den eigentlichen Zielserver, im Beispiel der Server rSrv übertragen werden. Zum Verschlüsseln wird ein öffentlicher Schlüssel rSrv PubK bzw. ein digitales Zertifikat des Client C verwendet. Die Signatur kann durch den bereitstellenden Knoten (der Sender, z.B. Client C, oder die virtuelle Kommunikationseinheit vSrv) oder durch beide erfolgen.

In einer Ausführungsform wird die Handshake-Information HSInfo Variante aufgezeichnet und komplett in eine Übertragungsdatenstruktur verpackt und an die zweite Kommunikationseinheit rSrv unidirektional übertragen. In einer weiteren Ausführungsform wird nicht die gesamte Handshake-Information HSInfo, sondern der daraus resultierende Security-Sitzungs-Kontext (z.B. Session Key, Cipher Suite) übertragen. Vorzugsweise wird die Handshake-Information HSInfo unmittelbar nach Abschluss des DTLS-Handshakes an die zweite Kommunikationseinheit rSrv übertragen. In einer Ausführungsform wird eine weitere Handshake-Information HS-Info nach einer DTLS-Sitzungsschlüsselaktualisierung (Session-Key-Update) übertragen. Dies hat den Vorteil, dass mit der Handshake-Information die empfangenen, verschlüsselten DTLS-Daten (Records) unmittelbar entschlüsseln kann. In einer weiteren Ausführungsform wird HS-Info zeitlich verzögert an die zweite Kommunikationseinheit rSrv übertragen. Dies kann erfolgen nachdem die DTLS-Sitzung zwischen dem Client C und der virtuellen Kommunikationseinheit vSrv beendet wurde, und/oder nachdem ein Key-Update erfolgt ist. Dies hat den Vorteil, dass die zweite Kommunikationseinheit rSrv erst nachträglich die Daten entschlüsseln kann, d.h. während der verschlüsselten Datenübertragung zwischen dem Client C und der virtuellen Kommunikationseinheit vSrv die Daten weder mitgehört noch manipuliert werden können.

Der eigentliche Endpunkt, im Beispiel die zweite Kommunikationseinheit empfängt die Handshake-Information und richtet den vom Client C mit der virtuellen Kommunikationseinheit vSrv vereinbarten Security-Sitzungs-Kontext ein. D.h. er richtet einen DTLS-Session-Kontext ein, der der empfangenen Handshake-Information HSInfo entspricht. Dadurch kann er die empfangenen Nutzdaten entschlüsseln und deren Integrität prüfen.

Das Senden der verschlüsselten Nutzdaten realisiert vorzugsweise die virtuelle Kommunikationseinheit vSrv in Richtung der zweiten Kommunikationseinheit rSrv. Dies hat den Vorteil, dass auf der ersten Kommunikationseinheit ein regulärer, unveränderter Client C verwendet werden kann. Es wird lediglich eine spezielle Kommunikationseinheit vSrv auf dem dem (Feld-)Gerät FD benötigt, der neben der Handshake-Information HSInfo die verschlüsselten Nutzdaten (DTLS Record Layer) empfängt und ohne Bearbeitung an den eigentlichen Empfänger, im Beispiel die zweite Kommuniktionseinheit rSrv, weiterleitet. Da das Gerät FD beide Funktionen (Client C und virtuelle Kommunikationseinheit vSrv) realisiert, ist die verschlüsselte Übertragung eines DTLS-Records vom Sender (C) zum eigentlichen Empfänger (rSrv) Ende-zu-Ende geschützt.

Über die DTLS-Sitzung können insbesondere IoT-Protokollnachrichten wie z.B. MQTT-Publish-Nachrichten oder CoAP-Nachrichten gesichert übertragen werden.

In einer weiteren Ausführungsform wird die virtuelle Kommunikationseinheit vSrv auf einem separaten Rechner als zentrale Komponente in der Anlage (Factory Network) realisiert. Somit können mehrere Feldgeräte FD über die virtuelle Kommunikationseinheit vSrv als Proxy Daten an die zweite Kommunikationseinheit rSrv senden. Der Proxy kann hierüber auch eine weitere nützliche Funktionalität wie NAT (zur Weiterleitung an die zweite Kommunikationseinheit rSrv) realisieren. Der wesentliche Vorteil dieser Ausführungsform liegt darin, dass die feldgeräteseitige Implementierung nicht angepasst werden muss und sich Skalierungseffekte erzielen lassen. Dennoch ist die Übertragungsstrecke zwischen dem ersten Netzwerk (z.B. Fabriknetzwerk) von der virtuellen Kommunikationseinheit vSrv und dem eigentlichen Empfänger (zweite Kommunikationseinheit rSrv) Ende-zu-Ende geschützt.

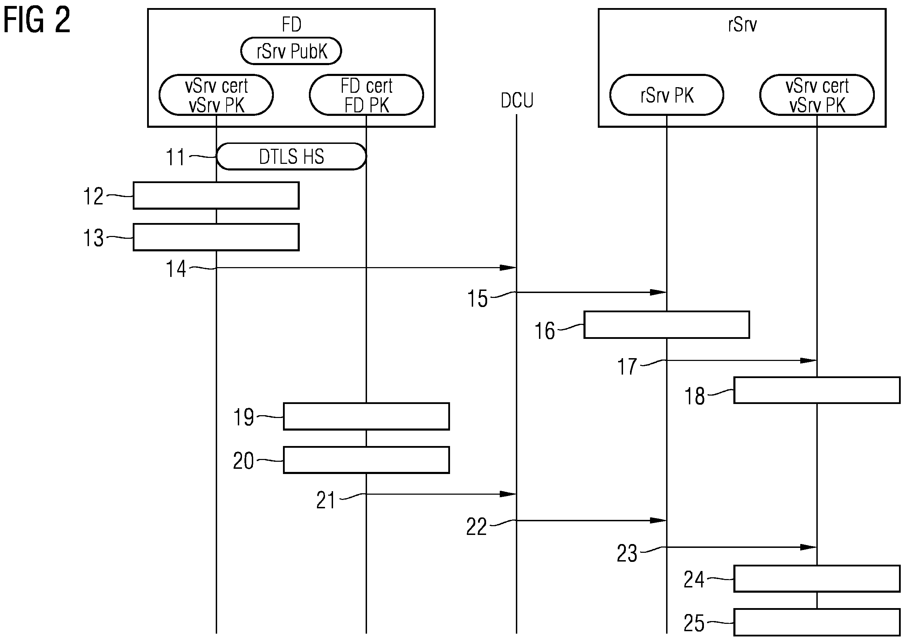

Figur 2 zeigt ein Ablaufdiagramm eines erfindungsgemäßen Vorgehens, wobei die einzelnen Schritte mit den Ziffern 11 bis 25 gekennzeichnet sind.

Das sendende (Feld-)Gerät FD ist mit einer Adresse (IP-Adresse, DNS-Name, URL) des Zielservers, im Beispiel die zweite Kommunikationseinheit rSrv, und einem zugeordneten kryptographischen Schlüssel, im Beispiel ein öffentlicher Schlüssel rSrv PubK, ein digitales Zertifikat vSrv cert und einen privaten Schlüssel vSrv PK konfiguriert. Weiterhin kann das Feldgerät FD ein Client-Zertifikat FD cert und einen Client-Schlüssel FD PK aufweisen.

Im Feldgerät FD kann eine virtuelle Kommunikationseinheit vSrv implementiert sein. Diese verwendet kryptographische Parameter. Der eigentliche Client C baut als DTLS-Client eine DTLS-Sitzung zu seiner internen virtuellen Kommunikationseinheit vSrv auf (siehe Schritt 11). Dieser kann aus Protokollsicht DTLS HS beidseitig authentisiert sein (es ist auch eine einseitige Authentisierung oder gar keine Authentisierung möglich). Als Ergebnis ist ein gemeinsamer Security-Sitzungs-Kontext (z.B. Sitzungsschlüssel und Cipher Suite entsprechend der Handshake-Information HSInfo) für den DTLS-Client und der virtuellen Kommunikationseinheit eingerichtet (siehe Schritt 12). Die Handshake-Information HSInfo wird mit dem öffentlichen Schlüssel rSrv PubK der zweiten Kommunikationseinheit rSrv verschlüsselt (Schritt 13) und an diese übertragen (Schritt 14 und 15). Vorzugsweise ist sie weiterhin vom Client signiert, d.h. mit dessen privaten Schlüssel FD PK. Eine weitere virtuelle Kommunikationseinheit auf der zweiten Kommunikationseinheit rSrv entschlüsselt die Handshake-Info HSInfo (Schritt 16) und richtet den Security-Sitzungs-Kontext mit der entschlüsselten HSInfo (Schritt 17) ein (Schritt 18).

Nach dieser Einrichtungsphase liegt der Security-Sitzungs-Kontext (entsprechend der HSInfo) auf der weiteren virtuellen Kommunikationseinheit der zweiten Kommunikationseinheit rSrv vor. Wenn nun der Client des Feldgeräts FD ein Datenpaket sendet (Schritt 19), so kann dieses verschlüsselt (Schritt 20) an die zweite Kommunikationseinheit rSrv gesendet (Schritt 22, 23) und dort entschlüsselt (Schritt 24) und bearbeitet (Schritt 25) werden. Das Besondere ist, dass eine rein unidirektionale Kommunikation zwischen dem Feldgerät FD und der zweiten Kommunikationseinheit rSrv erfolgt. Ein Einweg-Gateway (DCU, data capture unit) leitet lediglich das Datenpaket bzw. die Datenpakete vom Feldgerät FD (Schritt 21) an die zweite Kommunikationseinheit rSrv weiter, aber nicht in die Gegenrichtung.

In einer Ausführungsform wird für die Aushandlung der DTLS-Sitzung (DTLS Handshake) ein geheimer pre-shared Schlüssel (PSK Cipher Suite) verwendet. In einer weiteren Ausführungsform erfolgt ein nicht-authentisierter DTLS-Handshake.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur kryptographisch geschützten unidirektionalen Datenübertragung von Nutzdaten, wobei
ein oder mehrere die Nutzdaten umfassende Datenpakete auf einer Ende-zu-Ende-Datenübertragungsstrecke von einer ersten Kommunikationseinheit (C) in einem ersten Netzwerk (NW1) über eine Einwegkommunikationseinheit (DCU), die zwischen dem ersten Netzwerk (NW1) und einem zweiten Netzwerk (NW2) angeordnet ist, an eine zweite Kommunikationseinheit (rSrv) im zweiten Netzwerk (NW2) übertragen werden,
aufweisend folgende Verfahrensschritte:
I. Aushandeln von mindestens einem kryptographischen Parameter zwischen der ersten Kommunikationseinheit (C) und einer dritten Kommunikationseinheit (vSrV) im ersten Netzwerk (NW1) für die kryptographisch geschützte Datenübertragung von Nutzdaten von der ersten Kommunikationseinheit zur zweiten Kommunikationseinheit,
II. Erzeugen zumindest einer Übertragungsdatenstruktur (HSinfo), in der zumindest teilweise die ausgehandelten kryptographischen Parameter für die kryptographisch geschützte Datenübertragung des Datenpakets oder der mehreren Datenpakete enthalten sind,
III. Verschlüsseln der zumindest einen Übertragungsdatenstruktur mit einem Schlüssel der zweiten Kommunikationseinheit,
IV. Übertragen der verschlüsselten, zumindest einen Übertragungsdatenstruktur zur zweiten Kommunikationseinheit im zweiten Netzwerk,
V. Entschlüsseln der verschlüsselten, zumindest einen Übertragungsstruktur,
VI. Verschlüsseln der zur zweiten Kommunikationseinheit zu übertragenden Nutzdaten mit den ausgehandelten kryptographischen Parametern und Übertragen verschlüsselten Nutzdaten zur zweiten Kommunikationseinheit, und
VII. Entschlüsseln der übertragenen Nutzdaten mit den in der entschlüsselten Übertragungsstruktur enthaltenen kryptographischen Parametern.

2. Verfahren nach dem vorhergehenden Anspruch, **dadurch gekennzeichnet, dass** eine dritte Kommunikationseinheit (vSrV) der Einwegkommunikationseinheit vorgeordnet wird, welche die Schritte II, III und IV des Anspruchs 1 ausführt.

3. Verfahren nach einem der vorhergehenden Ansprüche, **dadurch gekennzeichnet, dass** auf der Teilübertragungsstrecke zwischen der ersten Kommunikationseinheit und der dritten Kommunikationseinheit das Datenübertragungsprotokoll Datagram Transport Layer Security, abgekürzt DTLS, verwendet wird.

4. Verfahren nach einem der vorhergehenden Ansprüche, **dadurch gekennzeichnet, dass** eine weitere, der zweiten Kommunikationseinheit vorgeordnete Kommunikationseinheit (vSrv) den Schritt V mit Hilfe der kryptographischen Parameter aus der Übertragungsstruktur ausführt.

5. Verfahren nach einem der vorhergehenden Ansprüche, **dadurch gekennzeichnet, dass** der mindestens eine kryptographische Parameter einen Sitzungsschlüssel, eine Cipher Suite, Signatur und/oder Zertifikat umfasst.

6. Verfahren nach einem der vorhergehenden Ansprüche, bei dem das Verfahren computerimplementiert ausgestaltet ist.

7. Anordnung zur Durchführung des Verfahrens nach einem der Ansprüche 1 bis 6.

8. Computerprogrammprodukt, das direkt in einen programmierbaren Computer ladbar ist, umfassend Programmcodeteile, die dazu geeignet sind, die Schritte computerimplementierten Verfahrens nach Anspruch 6 durchzuführen.

## Claims

1. Method for the cryptographically protected unidirectional data transmission of user data, wherein
one or more data packets comprising the user data are transmitted on an end-to-end data transmission path from a first communication unit (C) in a first network (NW1), via a one-way communication unit (DCU) arranged between the first network (NW1) and a second network (NW2), to a second communication unit (rSrv) in the second network (NW2),
comprising the following method steps:
I. negotiating at least one cryptographic parameter between the first communication unit (C) and a third communication unit (vSrV) in the first network (NW1) for the cryptographically protected data transmission of user data from the first communication unit to the second communication unit,
II. generating at least one transmission data structure (HSinfo) containing at least partially the negotiated cryptographic parameters for the cryptographically protected data transmission of the data packet or of the plurality of data packets,
III. encrypting the at least one transmission data structure with a key of the second communication unit,
IV. transmitting the encrypted, at least one transmission data structure to the second communication unit in the second network,
V. decrypting the encrypted, at least one transmission structure,
VI. encrypting the user data to be transmitted to the second communication unit with the negotiated cryptographic parameters and transmitting encrypted user data to the second communication unit, and
VII. decrypting the transmitted user data with the cryptographic parameters contained in the decrypted transmission structure.

2. Method according to the preceding claim, **characterized in that** a third communication unit (vSrV) is arranged upstream of the one-way communication unit and carries out steps II, III and IV of Claim 1.

3. Method according to one of the preceding claims, **characterized in that** the data transmission protocol Datagram Transport Layer Security, abbreviated DTLS, is used on the partial transmission path between the first communication unit and the third communication unit.

4. Method according to one of the preceding claims, **characterized in that** a further communication unit (vSrv) arranged upstream of the second communication unit carries out step V with the aid of the cryptographic parameters from the transmission structure.

5. Method according to one of the preceding claims, **characterized in that** the at least one cryptographic parameter comprises a session key, a cipher suite, signature and/or certificate.

6. Method according to one of the preceding claims, in which the method is computer-implemented.

7. Arrangement for carrying out the method according to one of Claims 1 to 6.

8. Computer program product which can be loaded directly into a programmable computer, comprising program code parts that are suitable for carrying out the steps of the computer-implemented method according to Claim 6.

## Revendications

1. Procédé de transmission unidirectionnelle, protégée de manière cryptographique, de données utiles, dans lequel
un ou plusieurs paquet (s) de données comprenant les données utiles est/sont transmis sur une voie de transmission de données de bout en bout depuis une première unité de communication (C) d'un premier réseau (NW1) jusqu'à une deuxième unité de communication (rSrv) d'un deuxième réseau (NW2) par l'intermédiaire d'une unité de communication unidirectionnelle (DCU) qui est agencée entre le premier réseau (NW1) et le deuxième réseau (NW2),
comprenant les étapes de procédé ci-dessous consistant à :
I. négocier au moins un paramètre cryptographique entre la première unité de communication (C) et une troisième unité de communication (vSrV) au sein du premier réseau (NW1) en vue d'une transmission protégée de manière cryptographique des données utiles depuis la première unité de communication vers la deuxième unité de communication,
II. générer au moins une structure de données de transmission (HSinfo) dans laquelle sont contenus au moins en partie les paramètres cryptographiques négociés en vue de la transmission de données protégée de manière cryptographique du paquet de données ou de la pluralité de paquets de données,
III. crypter la au moins une structure de données de transmission avec une clé de la deuxième unité de communication,
IV. transmettre la au moins une structure de données de transmission cryptée vers la deuxième unité de communication du deuxième réseau,
V. décrypter la au moins une structure de transmission cryptée,
VI. crypter, avec les paramètres cryptographiques négociés, les données utiles à transmettre vers la deuxième unité de communication et transmettre les données utiles cryptées vers la deuxième unité de communication, et
VII. décrypter les données utiles transmises, grâce aux paramètres cryptographiques contenus dans la structure de transmission décryptée.

2. Procédé selon la revendication précédente, **caractérisé en ce qu'**une troisième unité de communication (vSrV) est placée en amont de l'unité de communication unidirectionnelle, laquelle exécute les étapes II, III et IV de la revendication 1.

3. Procédé selon l'une quelconque des revendications précédentes, **caractérisé en ce que** le protocole de transmission de données Datagram Transport Layer Security, en abrégé DTLS, est utilisé sur la sous-voie de transmission entre la première unité de communication et la troisième unité de communication.

4. Procédé selon l'une quelconque des revendications précédentes, **caractérisé en ce qu'**une autre unité de communication (vSrv) placée en amont de la deuxième unité de communication met en œuvre l'étape V à l'aide des paramètres cryptographiques issus de la structure de transmission.

5. Procédé selon l'une quelconque des revendications précédentes, **caractérisé en ce que** ledit au moins un paramètre cryptographique comprend une clé de session, une suite de chiffrement, une signature et/ou un certificat.

6. Procédé selon l'une quelconque des revendications précédentes, dans lequel le procédé est mis en œuvre grâce à un ordinateur.

7. Agencement permettant la mise en œuvre du procédé selon l'une quelconque des revendications 1 à 6.

8. Produit-programme informatique pouvant être chargé directement dans un ordinateur programmable, comprenant des parties de code de programme appropriées pour mettre en œuvre les étapes du procédé mis en œuvre par ordinateur selon la revendication 6.
